**Europäisches Patentamt**

**European Patent Office**

**Office européen des brevets**

(11) Veröffentlichungsnummer: **0 104 209**
**B1**

(12) **EUROPÄISCHE PATENTSCHRIFT**

(45) Veröffentlichungstag der Patentschrift:
**07.01.88**

(21) Anmeldenummer: **83901063.4**

(22) Anmeldetag: **22.03.83**

(86) Internationale Anmeldenummer:
**PCT/DE 83/00052**

(87) Internationale Veröffentlichungsnummer:
**WO 83/03461** (13.10.83 Gazette 83/24)

(51) Int. Cl.⁴: **F 24 D 19/10**, G 05 D 23/24,
G 05 D 16/20

(54) **Heizungsumwälzpumpe für Wechselstrombetrieb und Anlage mit einer solchen Pumpe.**

(30) Priorität: **23.03.82 DE 3210641**

(43) Veröffentlichungstag der Anmeldung:
**04.04.84 Patentblatt 84/14**

(45) Bekanntmachung des Hinweises auf die Patenterteilung:
**07.01.88 Patentblatt 88/1**

(84) Benannte Vertragsstaaten:
**AT BE CH DE FR GB LI LU NL SE**

(56) Entgegenhaltungen:
**DE - A - 2 148 280**
**DE - A - 2 553 271**
**FR - A - 2 354 519**
**FR - A - 2 454 002**
**GB - A - 2 026 743**
**GB - A - 2 068 601**

(73) Patentinhaber: **Laing, Karsten, Hofener Weg 35-37,**
**D-7148 Remseck 2- Aldingen (DE)**
Patentinhaber: **Laing, Oliver, Hofener Weg 35-37,**
**D-7148 Remseck 2 - Aldingen (DE)**

(72) Erfinder: **Laing, Karsten, Hofener Weg 35-37,**
**D-7148 Remseck 2- Aldingen (DE)**
Erfinder: **Laing, Oliver, Hofener Weg 35-37,**
**D-7148 Remseck 2 - Aldingen (DE)**

(74) Vertreter: **Goddar, Heinz J., Dr. et al, FORRESTER &**
**BOEHMERT Widenmayerstrasse 4/I,**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Heizungsanlagen mit einer Heizungsumwälzpumpe für Wechselstrombetrieb nach dem Oberbegriff des Anspruchs 1 und Heizungsanlagen, die mit derartigen Heizungspumpen betrieben werden.

Bei der aus der DE-A-25 53 271 vorbekannten Heizungsumwälzpumpe ist die Schaufelrad/Rotor-Einheit zur Regelung der Vorlaufmischung verschwenkbar ausgebildet. Die Pumpe muss dabei ständig arbeiten, was insbesondere bei Niedertemperaturpumpen wegen der erforderlichen hohen Durchsatzströme und der sich daraus ergebenden hohen Pumpenleistung zu einem hohen Verbrauch an elektrischer Energie führt.

Der Erfindung liegt die Aufgabe zugrunde, eine Heizungsumwälzpumpe zu schaffen, die proportional dem jeweiligen Leistungsbedarf entsprechend schneller oder langsamer läuft und somit stromsparend arbeitet.

Erfindungsgemäss wird diese Aufgabe durch die im kennzeichnenden Teil des Anspruchs 1 angegebenen Merkmale gelöst. Die Absenkung der Motorleistung einer Heizungsumwälzpumpe durch elektronische Schaltmittel ist an sich aus der FR-A-2 354 519 vorbekannt.

Bei der vorgeschlagenen Heizungsumwälzpumpe wird jedoch der Motor mit vollen Wechselstromwellen betrieben, wobei das Verhältnis des jeweiligen Einschaltintervalles zu dem darauf folgenden Pauseninterval den Durchsatzstrom bestimmt. Der Pumpenmotor wird also zyklisch zu- und abgeschaltet. Dadurch ist sichergestellt, dass der Anlauf jeweils mit voller Spannung erfolgt. Die Zu- und Abschaltung hat also jeweils dann zu erfolgen, wenn die Netzspannkurve die Null-Linie schneidet. Damit ist gleichzeitig sichergestellt, dass keine Funk- und Fernsehstörung möglich ist und auch der Kondensator des zweiphasigen Motors vor unzulässig hohen Spannungsspitzen geschützt wird.

Die Teillast-Leistung wird durch das Integral gebildet, welches sich aus dem Einschalt-Pausen-Verhältnis ergibt. Dieses Verhältnis wird durch (a) handgesteuerte oder (b) temperaturgesteuerte oder (c) druckgesteuerte Schaltelemente in Abhängigkeit vom Wärmeleistungsbedarf bestimmt.

Erfindungsgemäss kann die Wiedereinschaltung in so kurzen Zeitabständen erfolgen, dass der Rotor des Motors in den Pausenintervallen nie voll zum Stehen kommt, so dass der Betriebszustand «flüssige Reibung» im Lager der Pumpen erhalten bleibt, wodurch Verschleisserscheinungen am Pumpenlager durch halbtrockene Reibung vermieden werden.

Diese Regelung von Heizungspumpen eignet sich besonders für Pumpen in Fussbodenheizungen und anderen Grossflächenheizungen. Derartige Heizsysteme sind durch eine ausserordentlich grosse Wärmeträgheit gekennzeichnet. Die Zu- und Abschaltung, wie sie in der Heizungstechnik üblich ist, eignet sich für die Fussbodenheizung nicht. Bei zu kurzen Einschaltintervallen würde der heisse Wärmeträger nur einen Teil des im Fussboden verlegten Rohres durchströmen. Dementsprechend würde auch nur ein Teil des Raumes erwärmt. An die Stelle der Mengenregelung muss deshalb bisher bei Fussbodenheizungen grundsätzlich eine Beimischregelung treten. Der Nachteil der Beimischregelung besteht darin, dass die Beimischpumpe permanent laufen muss, und zwar auch dann, wenn nur noch ganz kleine Heizleistungen erforderlich sind. Ein weiterer Nachteil besteht darin, dass motorisch betriebene Beimischventile sehr kostspielig und anfällig sind und zu einer teuren Installation führen. Durch die Erfindung ist es möglich, an die Stelle einer Beimischregelung eine gepulste Mengenregelung treten zu lassen. Gemäss der Erfindung fördert die Pumpe in jedem Falle mindestens soviel Wärmeträgerwasser, dass alle Bereiche des zu beheizenden Raumes mit Wärme versorgt sind. Nur bei Nennleistung läuft der Motor im Dauerbetrieb. Je kleiner jedoch die erforderliche Heizleistung wird, umso grösser werden die Pausen zwischen den Arbeitsintervallen, deren Intervall dadurch von der Länge des Rohrnetzes abhängig ist. Die Durchströmung erfolgt also stets mit voller Pumpenleistung, wodurch vermieden wird, dass stark unterschiedliche Temperaturen zwischen den Vorlaufbereichen und den Rücklaufbereichen des Fussbodens auftreten. Die gepulste Mengenregelung ist in der Figurenbeschreibung behandelt.

Die Erfindung wird im folgenden anhand einer Zeichnung weiter erläutert.

Fig. 1 zeigt einen Schnitt durch eine erfindungsgemässe Pumpe.

Fig. 2 zeigt einen Schnitt durch eine Variante zu Fig. 1.

Fig. 3 zeigt ein Blockschaltbild.

Fig. 4 zeigt den Spannungsverlauf bei einer besonderen Schaltung.

Fig. 5 zeigt ein Blockschaltbild mit Komparator.

Fig. 6 zeigt das Schaltbild zu Fig. 5.

Fig. 7 zeigt einen Schnitt durch eine erfindungsgemässe Pumpe für eine Heizungsanlage mit Rücklaufwasserbeimischung.

Fig. 8 zeigt einen Schnitt entlang der Linie B–B von Fig. 7.

Fig. 9 zeigt einen Schnitt entlang der Linie C–C von Fig. 7.

Fig. 10 eine Alternative zu der in Fig. 7 dargestellten Ausführungsform.

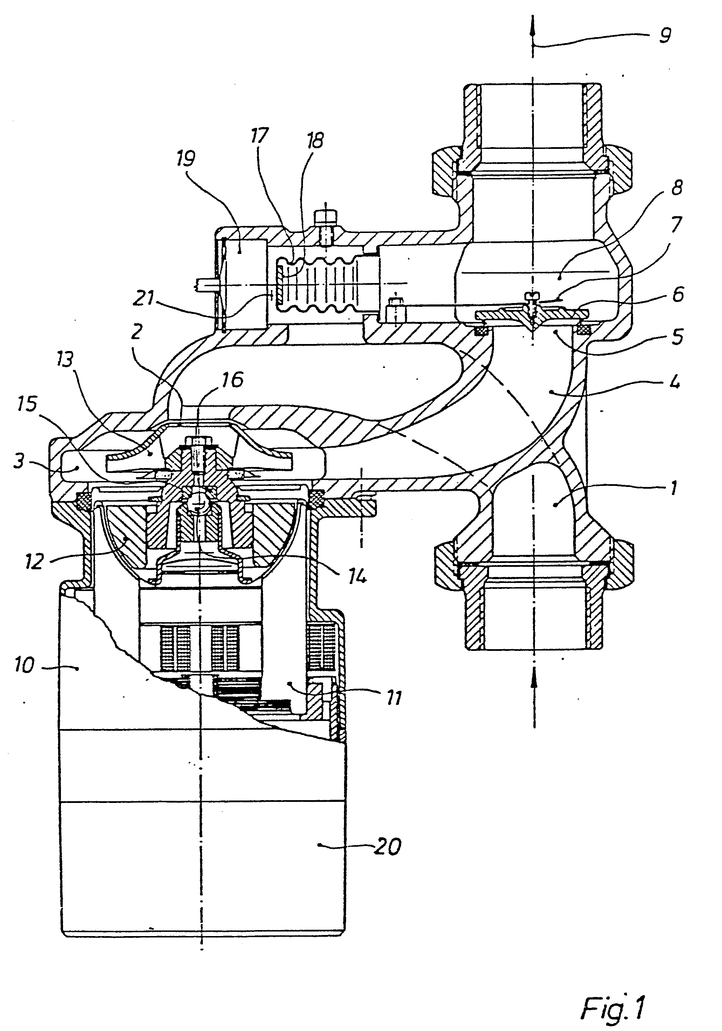

Figur 1 zeigt eine erfindungsgemässe Pumpe mit einem Motor mit sphärischem Luftspalt, nachstehend Kugelmotor genannt, im Schnitt. Bei dieser Pumpe kreuzt der Eintrittsstrom, der über den Kanal 1 in den Rotormund 2 hineinführt, den Austrittsstrom, der das Spiralgehäuse 3 durch den Austrittskanal 4 verlässt. Der Förderstrom wird dann durch eine Ventilöffnung 5 geleitet, die durch eine Ventilplatte 6, die an einer Feder 7 angelenkt ist, verschlossen gehalten wird, solange der Motor nicht in Betrieb ist. Im Bereich der Ventilplatte ist die Austrittsleistung 8 erweitert. Der Förderstrom verlässt gemäss Pfeil 9 die Pumpe. Da der Motor 10 senkrecht mit nach unten weisendem Stator 11 angeordnet ist, ist die sonst bei Kugelmotoren notwendige Gewichtsgleichheit zwischen dem Polringbereich 12 und dem Schaufelrad 13, bezogen auf die Unterstützungsfläche zwischen der Lagerkugel 14 und der Lagerpfanne 15, 16 nicht erforderlich. Dem Austritt 9 ist eine Heizungsanlage nachgeschaltet, deren Heizkörper mit raumtemperaturbetätigten Ventilen ausgestattet sind. Ein Faltenbalg 17 ist zwischen dem Druckraum und dem Saugraum angeordnet. Sein Boden 18 nähert sich mit zunehmendem Druck im Druckraum dem Näherungsschalter 19, wodurch die elektrischen Schaltmittel im Raum 20 eine Stromunterbrechung für den Pumpenmotor 10, 11 bewirken. Sobald also der Druck eine vorgegebene Höhe erreicht hat, bewirkt der kleiner gewordene Spalt 21 zwischen dem Boden 18 und dem Näherungsschalter 19 eine Unterbrechung der Stromzufuhr. Solange noch eines der Heizungsventile einen Förderstrom durchlässt, sinkt der Druck dann wieder ab, so dass sich der Spalt 21 wieder vergrössert und der Motor 10 erneut gespeist wird. Durch den Betrag des Druckintervalls zwischen Abschaltung und Wiedereinschaltung wird die Länge des Pauseintervalls bestimmt. Dieses sollte vorzugsweise so gering gehalten werden, dass die Rotor/Schaufelrad-Einheit 12, 13 ausser bei Extrembedingungen niemals ganz zum Stillstand gelangt.

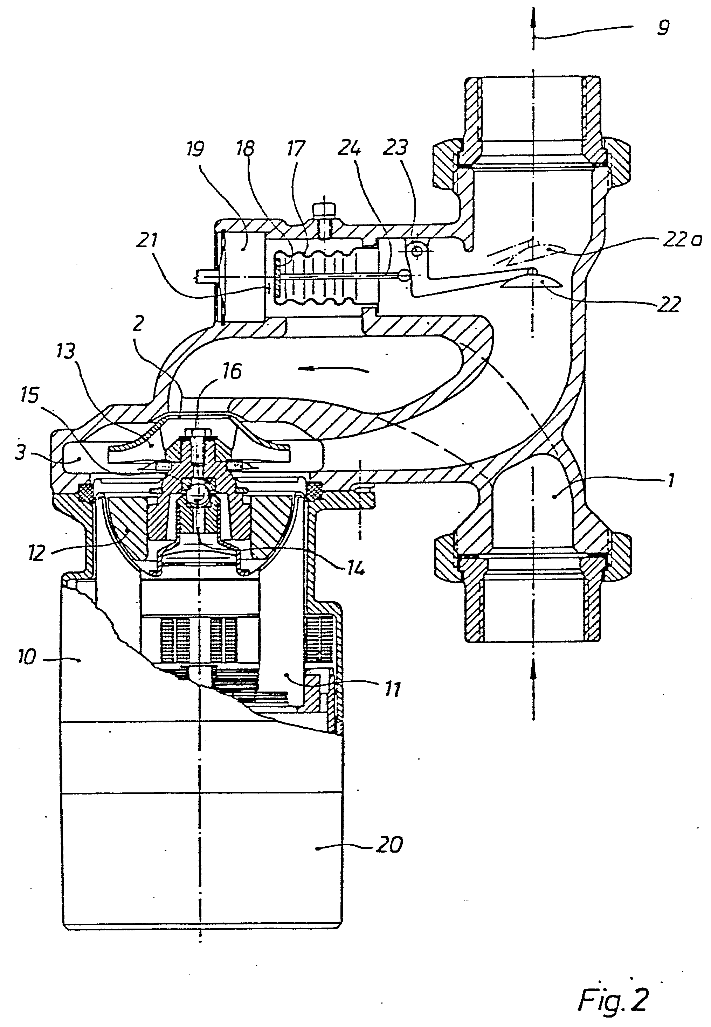

Figur 2 zeigt eine Abwandlung der Pumpe nach Fig. 1, jedoch ohne Ventil. Ein Widerstandskörper 22, der über einen Hebel im Drehpunkt 23 gelagert ist, drückt aufgrund seines Gewichtes über den Stab 24 auf den Membranboden 18 und täuscht damit hohen Druck vor. Die Schaltelektronik bewirkt unabhängig vom Näherungsschalter eine nur wenige Sekunden währende Einschaltung des Motors 10 in Intervallen von einigen Minuten. Sind alle Heizkörperventile geschlossen, so verbleibt der Widerstandskörper 22 in seiner Lage. Kommt dagegen eine Durchströmung des Heizungssystems zustande, weil sich Heizkörperventile geöffnet haben, so wird der Widerstandskörper 22 in die Lage 22a verschwenkt. Damit ist die Berührung zur Stange 24 unterbrochen, so dass nunmehr das Verhältnis von Einschalt- und Pauseintervall wieder ausschliesslich von der Druckdifferenz durch den Näherungsschalter 18, 19 und damit von der Drosselstellung der Heizkörperventile abhängig ist.

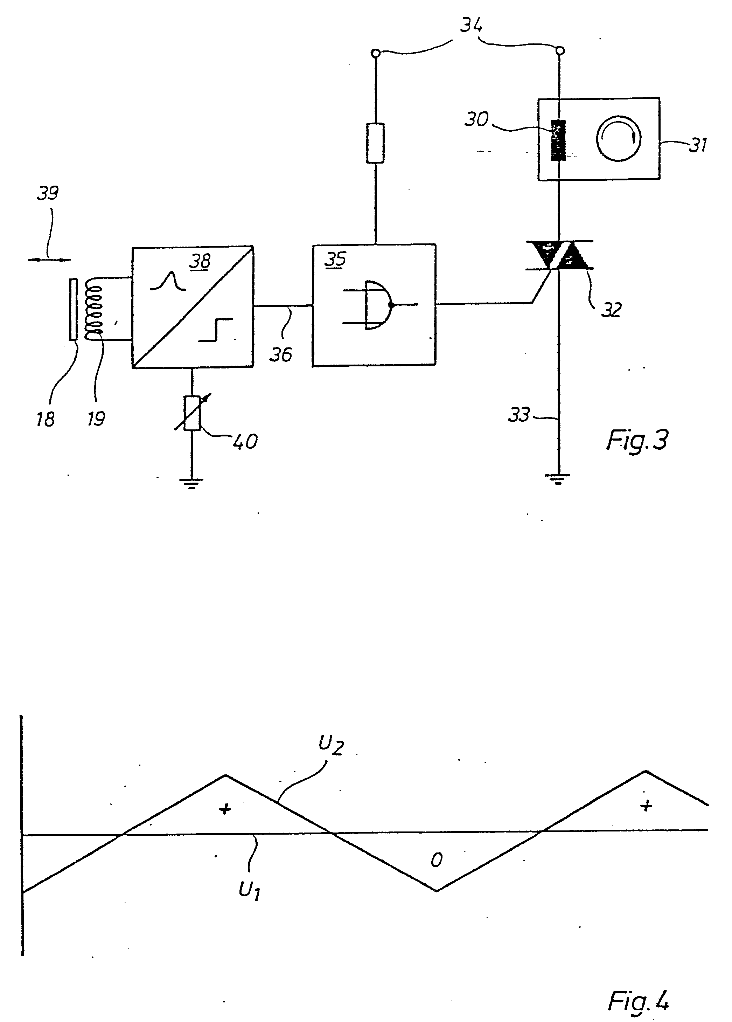

Figur 3 zeigt ein Blockschaltbild der erfindungsgemässen Pumpe. Die Wicklung 30 des Pumpenmotors 31 ist mit der Anode eines Triacs 32, dessen Kathode mit dem Nulleiter 33 verbunden ist, gespeist. Die Stromversorgung für den Pumpenmotor 31 wird durch den Triac 32 eingeschaltet. Die Ansteuerung des Triacs 32 erfolgt durch einen vom Netz 34 getriggerten Nullspannungsschalter 35, der über die Leitung 36 angesteuert wird. Das Steuersignal wird im Näherungsschalter 38 erzeugt, dessen Spule 19 durch die Annäherung des Bodens 18 so bedämpft wird, dass ein digitales Signal als Funktion des gemäss Doppelpfeil 39 verschieblich angeordneten Dämpfplättchens 18 erzeugt wird. Der Abstand zwischen der Spule 19 und dem Dämpfplättchen 18, bei dem das Umschaltsignal entsteht, kann durch das Potentiometer 40 eingestellt werden. Das Dämpfungsplättchen 18 wird durch den Faltenbalg 17 bewegt, so dass der Näherungsschalter 38 eine Abschaltung des Motors 31 über den Nullspannungsschalter 35 bewirkt, sobald die eingegebene Grösse des Spaltes 21 unterschritten wird. Da nunmehr die Drehzahl des Motors und damit des Schaufelrades abfällt, nimmt der Druck in Abhängigkeit vom Systemwiderstand rasch ab, so dass der Motor erneut eingeschaltet wird. Der Nullspannungsschalter 35 bewirkt, dass die Wiedereinschaltung in dem Augenblick erfolgt, in dem die Spannungskurve der Netzspannung die Nullinie schneidet.

Die Zu- und Abschaltung erfolgt in umso kleineren Zeitintervallen, je geringer der Systemwiderstand ist. Das bedeutet, dass bei relativ weit geöffneten Heizkörperventilen ein grosser Förderstrom erzeugt wird, während mit zunehmendem Systemwiderstand, wie er beispielsweise bei thermostatisch gesteuerten Heizkörperventilen sich dann einstellt, wenn die Soll-Raum-Temperatur annähernd erreicht ist, die Zuschaltung jeweils nur noch für ein sehr kurzes Einschaltinverval erfolgt. Dies bewirkt eine Herabsetzung der Arbeitsdrehzahl des Pumpenmotors und damit des Schaufelrades. Erreicht die Raumtemperatur die Solltemperatur, so schliessen die Heizkörperthermostatventile vollständig. Dadurch wird der vom Schaufelrad erzeugte Druck nicht abgebaut, da das Rückschlagventil 6 eine Rückströmung durch die Pumpe verhindert. Die Heizungspumpe verbleibt dementsprechend so lange ausgeschaltet, bis die Raumtemperatur unter die Solltemperatur fällt, wodurch die Heizkörperventile wieder einen von der Temperatur abhängigen Querschnitt für den Wärmeträgerdurchsatz freigeben. In der Praxis bedeutet dieses, dass die Heizungspumpe ohne eine besondere Abschaltung während der Sommerperiode abgeschaltet bleibt.

Die vom Näherungsschalter 18, 19 gebildeten Impulse können auch durch einen Komparator erzeugt werden, der eine Spannung $U_1$, die eine Funktion der Raumtemperatur oder der Vorlauftemperatur bildet, mit einer Spannung $U_2$, die einer mit entsprechenden Schaltmitteln erzeugten Dreieckspannung entspricht, vergleicht.

In Figur 4 ist die Spannungszuordnung gezeigt. Die Spannung $U_1$ bestimmt durch ihre Lage zur Spannung $U_2$, in welchen Zeitintervallen der Komparator ein Ausgangssignal «+» oder «0» abgibt. Dieses Signal gelangt über die Leitung 6 zum Nullspannungsschalter 35, der seinerseits wieder über den Triac 32 den Antriebsmotor 31 ansteuert. Die Frequenz von $U_2$ sollte so gewählt werden, dass über das Trägheitsmoment des Rotors mit angebautem Schaufelrad eine Drehzahlverringerung erreicht wird, die bei dem bevorzugten Einschalt-Pausen-Verhältnis noch nicht zum periodischen Stillstand führt. Dadurch kann die Pumpenleistung annähernd proportional mit dem Wärmebedarf herabgesetzt werden.

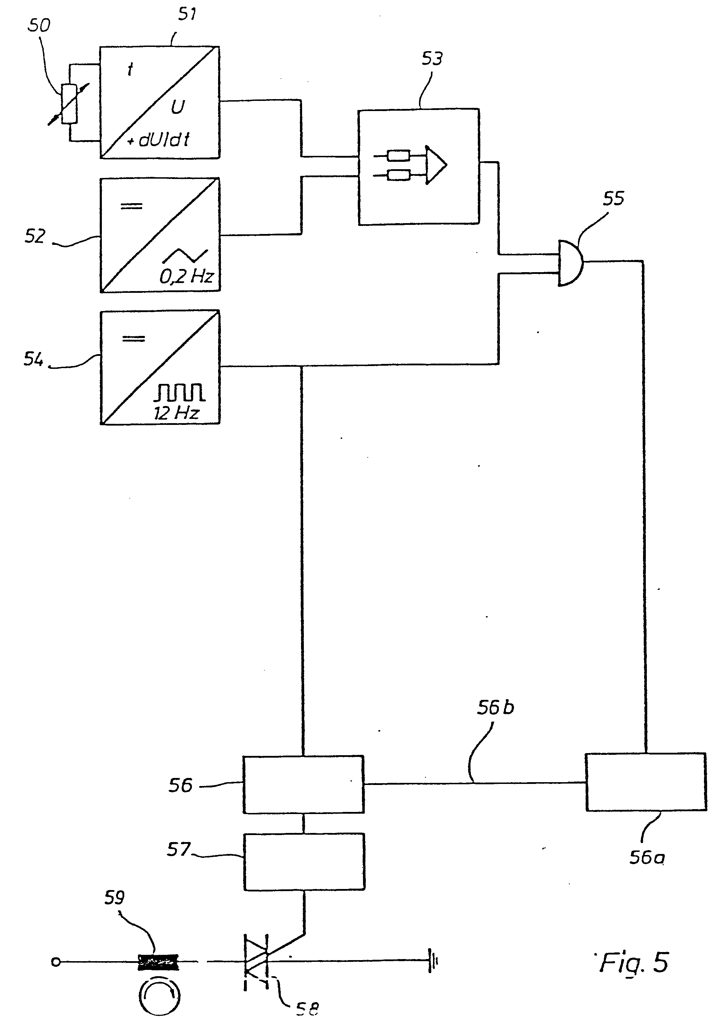

Figur 5 zeigt das Blockschaltbild einer Fussbodenheizung. Der Temperaturfühler 50 mit nachgeschaltetem Gleichspannungsverstärker 51 formt das thermische Signal in ein annähernd proportionales elektrisches Signal um. Dieses Signal setzt sich zusammen aus einer Spannung, die sich annähernd proportional mit der Raumtemperatur ändert und deren Gradient du/dt damit die Geschwindigkeit der Temperaturänderung repräsentiert. In einem Dreiecksspannungsgenerator 52 wird eine Dreiecks-Wechselspannung erzeugt, deren Frequenz bei etwa 0,2 Hz liegt. Im nachfolgenden Komparator 53 werden diese beiden Spannungen verglichen: Wenn die momentane Spannung aus dem Dreiecksgenerator grösser ist, als die Spannung aus dem Gleichspannungsverstärker 51, gibt der Komparator ein Ausgangssignal «+» in der Grösse der positiven Versorgungsspannung ab. Im umgekehrten Fall ist das Ausgangssignal «0», entsprechend der negativen Versorgungsspannung. Ein Rechteckgenerator 54 erzeugt eine Taktfrequenz von beispielsweise 12 Hz. Die Impulse gelangen einmal zu einem UND-Gatter 55 und zu einem ersten Zähler 56. In diesem Zähler werden die Impulse gezählt, z.B. bis $2^{12}$, dies entspricht bei 12 Hz einer Zeit von 3 Minuten. In dieser Zählzeit ist der über den Nullspannungsschalter 57 und den Triac 58 angeschlossene Pumpenmotor 59 eingeschaltet. Die durch das UND-Gatter 55 gelangenden Impulse werden im zweiten Zähler 56a aufaddiert, der ebenso beispielsweise einen Zählumfang von $2^{12}$ hat. Der Ausgang 56b des Zählers 56a startet den Zähler 56 zu einer neuen Laufzeit. Damit ergibt sich folgende Funktion:

Eine Temperatur, die beispielsweise am Ausgang des Gleichspannungsverstärkers 51 eine Spannung von der halben Versorgungsspannung erzeugt, lässt nach dem Komparator 53 eine Impulsfolge mit 50% «0» und 50% «+» entstehen. Durch das UND-Gatter 55 gelangen somit auch nur 50% der Zählimpulse an den Zähler 56a. Das bedeutet, dass dieser Zähler 56a doppelt so lang wie der Zähler 56 braucht, um bis zur Endzahl $2^{12}$ zu zählen. Die relative Einschaltdauer des Pumpenmotors 59 beträgt somit ebenfalls wieder 50%. Eine erhöhte Spannung am Ausgang des Gleichspannungsverstärkers 51 würde z.B. ein Impulspausenverhältnis von 30 : 70 bewirken. Umgekehrt führt eine Absenkung der Spannung des Verstärkers 51 zu einem grösseren Impulspausenverhältnis. Bei der Nennleistung ist dieses Verhältnis 1 : 0 geworden, d.h. es herrscht Dauerbetrieb.

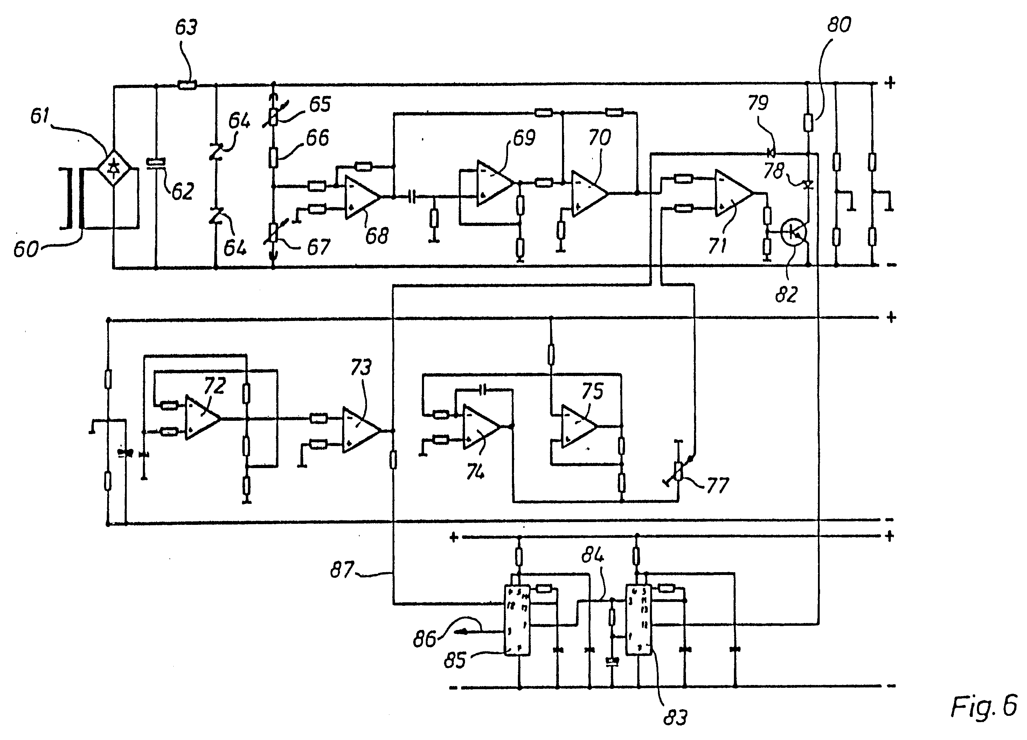

Figur 6 zeigt das Schaltbild der im Blockschaltbild Figur 5 gezeigten Schaltung. Die Versorgung erfolgt über den Netztrafo 60, der über eine Gleichrichterbrücke 61, gefiltert durch den Kondensator 62 und den Vorwiderstand 63 und über zwei Zener-Dioden 64 stabilisiert wird. Im ersten Spannungsteilerpfad, der aus einem Regelwiderstand 65, einem Vorwiderstand 66 und einem Heissleiter 67 besteht, wird vom Heissleiter gemessene Raumtemperatur in eine Spannung umgewandelt, die im Falle der Solltemperatur gleich der halben Versorgungstemperatur ist. Im nachfolgenden Verstärker 68 werden Abweichungen von dieser halben Versorgungsspannung verstärkt. Im nächstfolgenden Operationsverstärker 69 wird die Ausgangsspannung des Operationsverstärkers 69 differenziert und nochmals verstärkt. Beide Spannungen aus den Verstärkern 68 und 69 werden im Verstärker 70 addiert und dem negativen Eingangspfad des nachfolgenden Komparators 71 zugeführt.

In der Gruppe der Generatoren ist der erste Operationsverstärker 72 ein 12 Hz Takt-Generator, dem der Verstärker 73 als Impulsverstärker nachgeschaltet ist. Der Verstärker 74 ist mit dem Verstärker 75 zu einem Dreiecksgenerator zusammengeschaltet. Das Ausgangssignal des Dreiecksgenerators gelangt über das Potentiometer 77 in den positiven Pfad des Komparators 71.

Die 12 Hz Takt-Impulse gelangen an die UND-Schaltung, die aus den Dioden 78 und 79 und dem Widerstand 80 gebildet wird. Die gleiche UND-Schaltung wird durch den Transistor 82 angesteuert, der selbst vom Operationsverstärker 71 gesteuert wird. Das Ausgangssignal dieser UND-Schaltung gelangt in den Zähler 83. Von dem Zähler 83 geht über die Leitung 84 ein Startsignal an den Zähler 85, der nach erfolgtem Start die über Leitung 87 ankommenden Impulse zählt und während der Zählzeit ein Dauersignal über die Leitung 86 über einen nicht gezeigten Nullpunktschalter abgibt. Nach Ablauf der Zählzeit ist die Stromzufuhr zum Pumpenmotor so lange unterbrochen, bis ein weiteres Startsignal erfolgt ist.

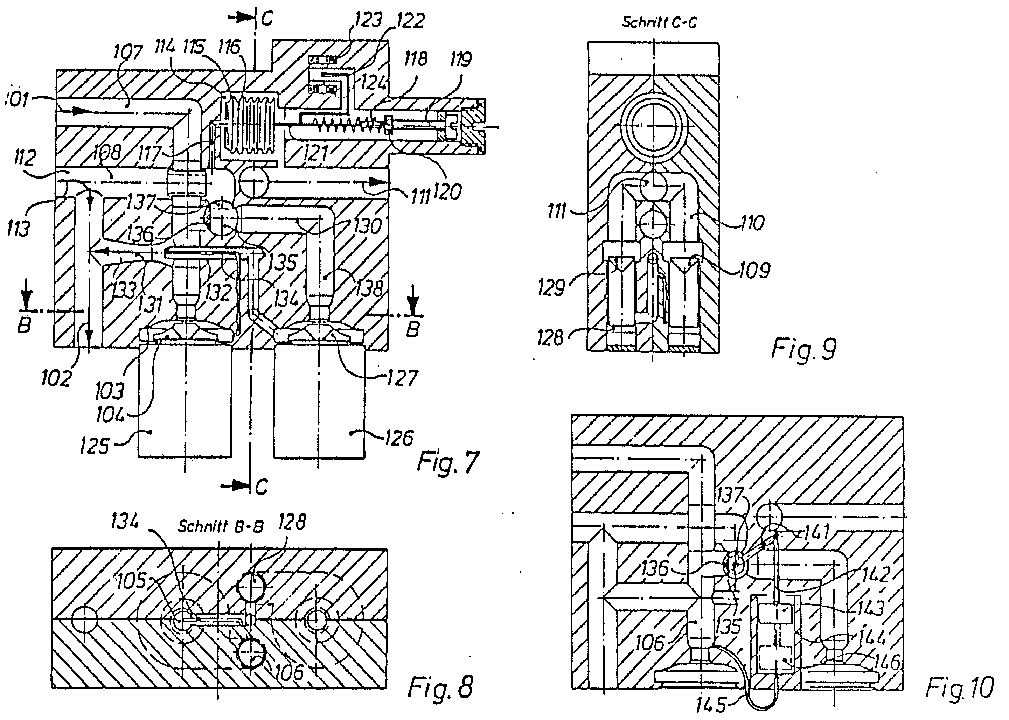

Figur 7 zeigt eine Hauptpumpe nach der Erfindung, die mit einer Hilfspumpe eine Einheit bildet, schematisiert im Schnitt, die über die Leitung 101 mit dem Kesselvorlauf und über die Leitung 102 mit dem Kesselrücklauf verbunden wird. Im Spiralgehäuse 103 der Hauptpumpe befindet sich das Pumpenlaufrad 104.

In Figur 8, die einen Schnitt durch die Schnittlinie B–B darstellt, ist der Eintrittsstutzen 105 und der Austrittsstutzen 106 sichtbar. Die Leitung 107 kreuzt die Leitung 108, ohne mit dieser zu kommunizieren. Der Stutzen 106 ist ebenfalls in der Figur 9 sichtbar, der der Schnittebene C–C zugeordnet ist. Der Durchsatz durchsetzt das Rückschlagventil 109 und gelangt durch das Hosenrohr 110 in den Austritt 111, durch den das Vorlaufwasser in das Heizungssystem gelangt. Mit dem Stutzen 112 ist der Rücklauf des Heizkörpersystems verbunden, so dass die Rücklaufströmung entsprechend dem Pfeil 113 zum Kesselrücklauf 102 strömt. In einem Raum 114, der mit dem Leitungsteil 111 zwischen dem Rückschlagventil 109 und den (nicht gezeigten) Regelventilen der Heizkörper kommuniziert, ist eine Membran 115 angeordnet. Der Innenraum 116 des Membrankörpers 115 kommuniziert über die Bohrung 117 mit der Rücklaufleitung 112. Über eine Zugfeder 118 wird der Membrankörper 115 vorgespannt. Die Vorspannung ist durch die Schraube 119 und die Mutter 120 einstellbar. Zwischen der Zugfeder 118 und dem Membrankörper 115 befindet sich ein Stab 121, der auf einen gutleitenden Metallkörper, z.B. in Form einer Zunge 122, die Auslenkung des Membrankörpers 115 unter dem Einfluss der Druckdifferenz zwischen den Leitungen 111 und 108/112 überträgt. Ausserhalb des flüssigkeitsgefüllten Raumes, in dem sich die Zunge 122 befindet, sind die Schwingkreisspulen 123 und eine Rückkoppelungsspule 124 eines Schwingkreises zur Erzeugung eines hochfrequenten Stromes angeordnet. Je weiter sich die Zunge 122 zwischen diese Spulen 123 und 124 schiebt, umso stärker wird der Schwingkreis gedämpft, bis schliesslich die von der Hauptspule 123 auf die Rückkoppelungsspule 124 rückgekoppelte Energie nicht mehr ausreicht, um eine ungedämpfte Schwingung aufrechtzuerhalten. Sobald keine Hochfrequenzschwingung mehr erzeugt wird, unterbricht der dem Schwingkreis nachgeschaltete Gleichrichterverstärker den Arbeitsstrom des Motors über einen Leistungsschalter, der nur bei Nulldurchgang der Wechselstromkurve schaltet. Dieser Vorgang wiederholt sich zyklisch in so enger Folge, dass der Motor 125 nur kurze Impulse erhält und dementsprechend eine geringere Leistung auf das Schaufelrad 104 bzw. 127 überträgt als bei kontinuierlichem Betrieb.

Wenn der Durchflusswiderstand durch das Heizkörper-Leitungssystem klein ist, läuft der Motor 125 also mit voller Drehzahl. Wenn der Druck auf einen mittels der Schraube 119 einstellbaren Druckwert angestiegen ist, wird der Motor 125 ausgeschaltet. Bei allen dazwischenliegenden Durchfluss-Widerstandwerten läuft der Motor 125 umso langsamer, je höher der hydraulische Widerstand ist. Damit verhält sich die Stromaufnahme des Motors 125 in erster Näherung proportional zum Wärmeverbrauch des Heizungssystems.

Erfindungsgemäss soll die Heizungsanlage mit variabler Vorlauftemperatur betrieben werden, was dadurch erreicht wird, dass dem aus der Leitung 111 austretenden Vorlaufstrom ein Teil des in die Leitung 112 eintretenden Rücklaufstromes beigemischt wird. Erfindungsgemäss wird dies durch eine Hilfspumpe 126 erreicht, die das Laufrad 127 antreibt und über einen Stutzen 128, der ein Rückschlagventil 129 enthält, mit dem Austrittsstutzen 111 verbunden ist. Diese Hilfspumpe fördert durch die Rücklaufleitung 108 und die Ansaugleitung 130 Rücklaufwasser. Das Mengenverhältnis wird erfindungsgemäss dadurch bestimmt, dass die Motoren 125 und 126 zyklisch nacheinander ein- und abgeschaltet werden, wobei die Menge der Beimischrate an Rücklaufwasser zum Vorlaufwasser durch das Impuls-Pausenverhältnis der Hauptpumpe 125 bestimmt wird. Die für den Motor 125 beschriebene Vorrichtung zur Abschaltung des Motors wirkt nunmehr auf beide Motoren, so dass beide Motoren zusammen nicht mehr Wasser fördern, als eine Pumpe im Dauerbetrieb. Dementsprechend ist auch die Stromaufnahme für die beiden Motoren 125 und 126 wiederum unmittelbar abhängig von dem Wasserdurchsatz durch das Heizkörpersystem. Die Rückschlagventile 129 und 109 dienen gleichzeitig als Schwerkraftbremsen und verhindern bei abgeschalteten Motoren 125 bzw. 126 eine unerwünschte Schwerkraftzirkulation.

Es besteht das Bedürfnis, dass bei Absenkung der Wassertemperatur im Rücklauf 112 unter die sogenannte Versottungstemperatur, bei der Kesselkorrosion eingesetzt, ein Teil aus dem in die Leitung 101 eintretenden Vorlaufwasser zurückgeführt wird, damit die Rücklauf-Wassertemperatur bis oberhalb der Versottungstemperatur angehoben wird. Zu diesem Zweck hat die Erfindung eine Wasserstrahlpumpe 131 vorgesehen, die zwischen der Kesselvorlaufleitung 101/107 und dem Anlagenrücklauf 112 angeordnet ist. Die Förderung von Heisswasser erfolgt durch das Strahlrohr 132, welches mit dem Austrittsbereich 128 der Hilfspumpe 126 kommuniziert. Nur dann also, wenn die Hilfspumpe 126 in Betrieb ist, und dadurch die Rücklaufwassertemperatur unzulässig weit abgekühlt ist, wird ein Teil des Vorlaufwassers entsprechend der Pfeilrichtung 133 direkt wieder in den Kesseleintritt 102 gefördert. Um zu verhindern, dass dann, wenn nur die Hauptpumpe 103 in Betrieb ist, Rücklaufwasser entgegen der Pfeilrichtung 133 dem Vorlaufwasser aus dem Eintrittsstutzen 111 beigemischt wird, ist innerhalb des Strahlrohres 132 ein zweites Strahlrohr 134 vorgesehen, welches mit dem Austrittsstutzen 106 der Hauptpumpe 103 kommuniziert. Dieses Strahlrohr 134 ist wesentlich dünner und erzeugt innerhalb der Strahlpumpe 131 eine Druckdifferenz, die gerade so gross ist, dass eine Strömung entgegen der Pfeilrichtung 133 sicher vermieden wird.

Das Bedürfnis nach erhöhter Betriebssicherheit hat dazu geführt, dass immer mehr Heizungsanlagen mit sogenannten Zwillingspumpen ausgerüstet werden, von denen eine jeweils die Reservepumpe bildet. Erfindungsgemäss lässt sich die Hilfspumpe 126 als Reservepumpe einsetzen, falls die Hauptpumpe 103 ausfallen sollte, indem im Dreiwegehahn 135 der Sperrkörper 136 aus der gezeigten Position in die gestrichelte Position 137 verschwenkt wird. Nunmehr kommuniziert der Ansaugbereich 138 der Hilfspumpe 126 mit dem Kesselvorlauf 111 über das Rohr 107.

Figur 10 zeigt eine Vorrichtung mit den gleichen Funktionen, bei der jedoch die Umschaltung des Dreiwegehahns 135 der Figur 7 nicht von Hand erfolgt, sondern automatisch. Der Dreiwegehahn 135 wird über einen Schwenkhebel 141 und einer Kolbenstange 142 mit einem schweren Kolben 143 gelenkig verbunden. Dieser Kolben gleitet in einem nach unten verschlossenen Zylinder 144, dessen Inneres über eine Leitung 145 mit dem Druckstutzen 106 der Hauptpumpe 103 verbunden ist. Die ganze Einrichtung 141 bis 144 befindet sich in einem nichtgezeigten Raum, der mit dem Rücklaufkanal 108 kommuniziert. Solange die Hauptpumpe 103 eingeschaltet ist, sinkt der Kolben 143 durch sein Gewicht in die gestrichelte Position 146. Das Verschluss-Stück 136 wird dadurch in die Position 137 verschwenkt. Sobald die Hauptpumpe 103 eingeschaltet wird, bewirkt der Druck im Druckstutzen 106 über die Leitung 115 eine Anhebung des Kolbens 143 und damit eine Verschwenkung des Verschluss-Stükkes in die Lage 136. Bei Ausfall der Hauptpumpe 103 erfolgt diese Verschiebung nicht. Dementsprechend wird dann die Hilfspumpe 126 automatisch zur Hauptpumpe.

**Patentansprüche**

1. Heizungsumwälzpumpe für Wechselstrombetrieb mit einem von ihrem Rotor (12) durch eine sphärische Wand getrennten Stator (11), wobei der Rotor (12) mit einem Schaufelrad (13) eine umlaufende, magnetisch in der Rotationsebene gehaltene und durch ein Lagerelement (14) gegen die magnetische Axialkraft des Stators (11) abgestützte Einheit bildet, dadurch gekennzeichnet, dass der Rotor (12) aus einem permanentmagnetischen Werkstoff mit einer Koerzitivfeldstärke von weniger als 350 Oe. besteht, das Lagerelement (14) als Kugel ausgebildet ist und zum Zwecke der Leistungsabsenkung elektrische Schaltmittel vorgesehen sind, die in an sich bekannter Weise in der Motorzuleitung zyklische Einschalt- und Pausenintervalle erzeugen, wobei die Unterbrechung und Wiederzuschaltung des Wechselstroms jeweils im Spannungs-Nulldurchgang erfolgt.

2. Heizungsumwälzpumpe nach Anspruch 1, dadurch gekennzeichnet, dass die Steuerung des Einschalt/Pausenverhältnisses über ein von Hand zu betätigendes Organ erfolgt.

3. Heizungsumwälzpumpe nach Anspruch 1, dadurch gekennzeichnet, dass das Signal zur Bildung des Einschalt/Pausenverhältnisses eine Funktion der Temperatur des geförderten Wärmeträgers ist.

4. Heizungsumwälzpumpe nach Anspruch 1, dadurch gekennzeichnet, dass das Signal zur Bildung des Einschalt/Pausenverhältnisses eine Funktion des durch die Heizkörperventile sich ändernden Systemwiderstandes in der der Pumpe nachgeschalteten Heizanlage ist.

5. Heizungsumwälzpumpe nach Anspruch 1, dadurch gekennzeichnet, dass die Bildung des Einschalt/Pausenverhältnisses eine Funktion des Differenzdruckes zwischen Ansaugseite und Druckseite der Zirkulationspumpe bleibt.

6. Heizungsanlage mit einem wärmeabgebenden System und mindestens einem Heizkörper, dessen Wärmeträgerdurchsatz über in Abhängigkeit von der Raumtemperatur gesteuerte Ventile dem aktuellen Wärmebedarf angepasst wird und einer Heizungsumwälzpumpe, dadurch gekennzeichnet, dass die Heizungsumwälzpumpe eine solche nach einem der vorangehenden Ansprüche ist.

7. Heizungsanlage nach Anspruch 6, dadurch gekennzeichnet, dass bei Einsatz einer Heizungsumwälzpumpe nach Anspruch 5 im Heizungspumpenkreis ein Rückschlagventil (16) angeordnet ist, und dass der Differenzdruck zwischen der Eintritts- und der Austrittsseite des Rückschlagventils (16) auf einen Drucksensor (17) wirkt, der ein Einschaltsignal erzeugt, sobald ein vorgegebener Differenzdruck unterschritten wird und nach Wiedererreichen des Ausgangsdruckwertes ein Ausschaltsignal erzeugt, wodurch die Heizungspumpe nur während einer Einschaltperiode in Betrieb ist, deren Dauer vom vorgegebenen Druckintervall bestimmt ist, und dass dem Einschaltintervall ein Pausenintervall folgt, das um so grösser ist, je grösser der aktuelle Drosselwiderstand der Ventile ist.

8. Heizungsanlage nach Anspruch 7, dadurch gekennzeichnet, dass die Druckdifferenz so gering gewählt wird, dass das Pausenintervall bei den in der Heizperiode vorwiegend vorherrschenden Drosselwiderständen kürzer ist als die Zeit, in welcher die abgeschaltete Rotorläufer/Schaufelrad-Einheit (12, 13) zum Stillstand kommt.

9. Heizungsanlage nach Anspruch 6 mit Temperaturregelung durch Rücklaufbeimischung, dadurch gekennzeichnet, dass eine Hauptpumpe (103) mit einer Hilfspumpe (126), die Wasser aus dem Rücklauf (112) der Heizungsanlage in den Vorlauf (111) fördert, eine Einheit bildet.

10. Heizungsanlage nach Anspruch 9, dadurch gekennzeichnet, dass den Druckseiten der beiden Pumpen Rückschlagventile (106, 128) nachgeschaltet sind, über die die Pumpen mit dem Vorlauf (111) der Heizungsanlage kommunizieren.

11. Heizungsanlage nach Anspruch 9 oder 10, dadurch gekennzeichnet, dass die Einschaltintervalle der Hilfspumpe (126) mit den Pausenintervallen der Hauptpumpe (103) zusammenfallen.

12. Heizungsanlage nach einem der Ansprüche 9 bis 11, dadurch gekennzeichnet, dass Ventile (135) vorgesehen sind, die die Substitution der Hauptpumpe (103) durch die Hilfspumpe (126) ermöglichen.

13. Heizungsanlage nach Anspruch 12, dadurch gekennzeichnet, dass eine Wasserstrahlpumpe (131) Heisswasser von der Vorlaufleitung (101) zur Rücklaufleitung (102) fördert, wobei der Treibstrahl der Wasserstrahlpumpe (131) von der Hilfspumpe (126) geliefert wird, so dass in Abhängigkeit von der relativen Länge des Einschaltintervalls der Hilfspumpe (126) ein mehr oder weniger grosser Anteil des heissen Vorlaufwassers dem durch die Leitung (112) eintretenden kalten Rücklaufwasser beigemischt wird.

**Claims**

1. Heating circulating pump for operation by alternating current having a stator (11) which is separated from its rotor (12) by a spherical wall, the rotor (12) forming with an impeller (13) a rotating unit which is magnetically maintained in the plane of rotation and by means of a bearing element (14) propped against the magnetic axial force of the stator (11), characterised in that the rotor (12) consists of a permanent magnet material having a coercive field strength of less than 350 Oe, the bearing element (14) is in the form of a sphere and for the purpose of reducing the power electrical circuit means are provided which, in a manner known per se, produce in the motor supply cyclical ON and OFF intervals, the interruption and re-connection of the alternating current each occuring as the voltage passes through zero.

2. Heating circulating pump according to Claim 1, characterised in that the ON/OFF ratio is controlled via a manually actuable device.

3. Heating circulating pump according to Claim 1, characterised in that the signal for forming the ON/OFF ratio is a function of the temperature of the heating medium being pumped.

4. Heating circulating pump according to Claim 1, characterised in that the signal for forming the ON/OFF ratio is a function of the resistance of the system in the heating installation downstream of the pump which is varied by the valves of the heater.

5. Heating circulating pump according to Claim 1, characterised in that the formation of the ON/OFF ratio ist a function of the differential pressure between the intake side and the pressure side of the circulating pump.

6. Heating installation with a heating circulating pump according to Claim 5 with a heat-emitting system with at least one heater, whose heating medium throughput is matched to the actual heat demand via valves which are controlled in dependence on the room temperature, characterised in that a non-return valve (16) is provided in the heating pump circuit, and that the differential pressure between the inlet- and discharge side of the non-return valve (16) acts upon a pressure sensor (17) which produces an ON-signal as soon as the differential pressure drops below a predetermined value, and produces and OFF-signal when the discharge pressure is restored, whereby the heating pump is in operation only during an ON-period whose duration is determined by the predetermined pressure interval, and that the ON-interval is followed by a pause-interval which is the greater, the greater the actual throttling resistance of the valves.

7. Heating installation according to Claim 6, characterised in that the pressure differential selected is so small that with the throttling resistances generally prevailing during the heating period the pause interval is shorter than the time taken for the switched off rotor/impeller unit (12, 13) to come to rest.

8. Heating installation according to Claim 6, particularly for heating large areas, whose heating medium throughput is matched to the actual heat demand, characterised in that the circuit means produce cyclical intervals, the ON-intervals being of such magnitude that they transmit a predetermined heat quantity via the heating medium to the heating system which is to be supplied, whereby the length of the pause-interval is the greater, the smaller the heat demand of the system.

9. Heating installation according to Claim 6 with temperature regulation by means of recirculation admixture, characterised in that a main pump (103) forms a unit with an auxiliary pump (126) which pumps water from the return conduit (112) into the inlet conduit (111) of the heating installation.

10. Heating installation according to Claim 9, characterised in that downstream of the pressure sides of the two pumps non-return valves (106, 128) are provided, via which the pumps communicate with the inlet conduit (111).

11. Heating installation according to Claim 9, characterised in that the ON-intervals of the auxiliary pump (126) coincide with the pause-intervals of the main pump (103).

12. Heating installation according to Claim 9, characterised in that valves (135) are provided which enable substitution of the main pump (103) by the auxiliary pump (126).

13. Heating installation according to Claim 12, characterised in that a water jet pump (131) pumps hot water from the inlet conduit (101) to the return conduit (102), the driving jet of the water jet pump (131) being supplied by the auxiliary pump (126), so that in dependence on the relative length of the ON-interval of the auxiliary pump (126), a greater or lesser proportion of the hot inlet water is admixed with the cold recirculating water entering by the conduit (112).

**Revendications**

1. Pompe de circulation pour chauffage, à marche en courant alternatif, comportant un stator (11) séparé de son rotor (12) par une paroi sphérique, le rotor (12) formant avec une roue à aube (13) une unité tournante, maintenue magnétiquement dans le plan de rotation et en appui sur un palier (14) de façon à résister à la force axiale magnétique du stator (11), caractérisée par le fait que le rotor (12) est constitué d'une matiére à caractère magnétique permanent d'intensité de champ coercitif inférieure à 350 Oe, le palier (14) est en forme de sphère et, en vue d'abaisser la puissance, sont prévus des moyens de commutation qui, de manière connue en soi, provoquent de manière cyclique, dans l'alimentation électrique du moteur, des intervalles de mise en circuit et de pause, l'interruption et la reconnection du courant alternatif s'opérant chaque fois par passage par zéro de la tension.

2. Pompe de circulation pour chauffage selon la revendication 1, caractérisée par le fait que la commande du rapport, mise en circuit/pause, s'effectue par un organe à commande manuelle.

3. Pompe de circulation pour chauffage selon la revendication 1, caractérisée par le fait que le signal de formation du rapport, mise en circuit/pause, est une fonction de la température du véhicule de chaleur en circulation.

4. Pompe de circulation pour chauffage selon la revendication 1, caractérisée par le fait que le signal de formation du rapport, mise en circuit/pause, est une fonction de la résistance du système que font varier les vannes du corps de chauffe, dans l'installation de chauffage montée à la suite de la pompe.

5. Pompe de circulation pour chauffage selon la revendication 1, caractérisée par le fait que la formation du rapport, mise en circuit/pause, est une fonction de la différence de pression entre l'admission et le refoulement de la pompe de circulation.

6. Installation de chauffage à pompe de circulation selon la revendication 5, comportant un système de dégagement de chaleur ayant au moins un corps de chauffe, dont le débit du véhicule de chaleur est adapté au besoin en chaleur du moment, par l'intermédiaire de vannes commandées en fonction de la température ambiante, caractérisée par le fait que dans le circuit de la pompe de chauffage est montée une soupape de retenue (16) et que la différence de pression entre l'entrée et la sortie de la soupape (16) agit sur un palpeur de pression (17) qui produit un signal de mise en circuit dès qu'on passe en dessous d'une différence de pression prédéterminée et produit un signal d'arrêt lorsqu'est atteinte à nouveau la pression de sortie, de sorte que la pompe n'est en marche que pendant une période de mise en circuit dont la durée est déterminée par l'intervalle de pression fixée à l'avance et, à l'intervalle de mise en circuit, fait suite un intervalle de pause qui est d'autant plus grand qu'est plus grande à ce moment la résistance d'étranglement de la soupape.

7. Installation de chauffage selon la revendication 6, caractérisée par le fait que la différence de pression est choisie assez faible pour que l'intervalle de pause, pour la résistance d'étranglement régnant de façon prépondérante pendant la période de chauffage, soit plus court que le temps pendant lequel vient au repos l'unité rotor/roue à aube (12, 13) mise hors circuit.

8. Installation de chauffage selon la revendication 6, en particulier de chauffage de grandes surfaces, dont le débit de véhicule de chaleur est adapté au besoin en chaleur du moment, en fonction de la puissance de chauffage souhaitée, caractérisée par le fait que les moyens de commutation produisent des intervalles cycliques, les intervalles de mise en circuit étant fixés de manière qu'ils transmettent, par le véhicule de chaleur, une quantité de chaleur prédéterminée au système de chauffage à alimenter, la longueur de l'intervalle de pause étant d'autant plus grand qu'est plus faible le besoin en chaleur du système.

9. Installation de chauffage selon la revendication 6, à réglage de température par mélange en retour, caractérisée par le fait que forme une unité une pompe principale (103) avec une pompe auxiliaire (126), qui refoule dans le circuit aller (111) de l'eau venant du retour (112) de l'installation de chauffage.

10. Installation de chauffage selon la revendication 9, caractérisée par le fait qu'aux côtés refoulement des deux pompes, sont raccordées des soupapes de retenue (106, 128) par l'intermédiaire desquelles les pompes communiquent avec l'aller (111) de l'installation de chauffage.

11. Installation de chauffage selon la revendication 9, caractérisée par le fait que les intervalles de mise en circuit de la pompe auxiliaire (126) coïncident avec les intervalles de pause de la pompe principale (103).

12. Installation de chauffage selon la revendication 9, caractérisée par le fait que sont prévues des soupapes (135) qui permettent la substitution de la pompe auxiliaire (126) à la pompe principale (103).

13. Installation de chauffage selon la revendication 12, caractérisée par le fait qu'une pompe à jet d'eau (131) fournit à la conduite de retour (102) de l'eau chaude venant de la conduite d'aller (101), le jet moteur de la pompe à jet (131) étant fourni par la pompe auxiliaire (126), de sorte que, en fonction de la longueur relative de l'intervalle de mise en circuit de la pompe auxiliaire (126), une portion plus ou moins grande de l'eau chaude d'aller est mélangée à l'eau de retour froide entrant par la conduite (112).

*Fig.1*

Fig. 2

Fig.3

Fig.4

Fig. 5

Fig. 6

0 104 209

0 104 209

Fig. 7

Schnitt C-C

Fig. 9

Schnitt B-B

Fig. 8

Fig. 10